Europäisches Patentamt

European Patent Office

Office européen des brevets

(19)

(11) **EP 0 512 872 B1**

(12) **FASCICULE DE BREVET EUROPEEN**

(45) Date de publication et mention
de la délivrance du brevet:
**10.09.1997 Bulletin 1997/37**

(51) Int Cl.⁶: **G01S 17/88**, G01S 17/02

(21) Numéro de dépôt: **92400971.5**

(22) Date de dépôt: **07.04.1992**

(54) **Procédé de détection d'obstacles présents devant un véhicule automobile et dispositif pour la mise en oeuvre d'un tel procédé**

Verfahren zum Detektieren von vor einem Kraftzeug befindlichen Hindernissen, und Gerät zum Ausführen des Verfahrens

Method of detecting obstacles in front of a motor vehicle and device for implementing the method

(84) Etats contractants désignés:
**DE GB IT**

(30) Priorité: **07.05.1991 FR 9105628**

(43) Date de publication de la demande:
**11.11.1992 Bulletin 1992/46**

(73) Titulaires:
- **AUTOMOBILES PEUGEOT**
  **75116 Paris (FR)**
- **AUTOMOBILES CITROEN**
  **92200 Neuilly-sur-Seine (FR)**

(72) Inventeurs:
- **de Saint Blancard, Marie**
  **F-92500 Rueil Malmaison (FR)**

- **Alizon, Joseph**
  **F-63670 Orcet (FR)**
- **Gallice, Jean**
  **F-63400 Chamalieres (FR)**

(74) Mandataire: **Thinat, Michel et al**
**Cabinet Weinstein,**
**20 Avenue de Friedland**
**75008 Paris (FR)**

(56) Documents cités:
**US-A- 3 781 111**     **US-A- 3 897 150**
**US-A- 4 477 184**

## Description

La présente invention concerne un procédé de détection d'obstacles présents notamment devant un véhicule automobile, ainsi qu'un dispositif pour la mise en oeuvre de ce procédé.

On connaît de tels procédés utilisant une caméra vidéo embarquée dans le véhicule et donnant une image vidéo de la scène en face du véhicule.

Cependant, pour localiser avec une seule caméra un point dans l'espace de la scène, il est nécessaire d'introduire des modèles de l'environnement aux fins de comparaison. Un tel procédé ne permet pas de déterminer des distances d'obstacles potentiellement dangereux.

On connaît également un autre procédé de détection d'obstacles utilisant deux ou plusieurs caméras vidéo permettant d'avoir des informations plus complètes de la scène faisant face au véhicule et ce dans une zone relativement proche du véhicule, jusqu'à 20 mètres environ. Cependant, ce procédé ne permet pas de déterminer précisément les distances d'obstacles du fait que l'erreur sur la distance à déterminer, dans la direction de visée, est proportionnelle au carré de la distance.

US-A-3 897 150 décrit un procédé de détection d'obstacles ou d'objets devant un véhicule, comprenant les étapes énoncées dans le préambule de la revendication 1.

Cependant, ce procédé connu ne permet pas d'obtenir une image Cependant, ce procédé connu ne permet pas d'obtenir une image vidéo sur laquelle sont incrustrées des données télémétriques permettant de localiser très précisément des objets distants du véhicule.

La présente invention a pour but d'éliminer les inconvénients ci-dessus des procédés connus en proposant un procédé de détection d'obstacles présents devant un véhicule automobile permettant de connaître avec précision la position d'un point de l'espace par rapport à un référentiel lié au véhicule et d'affecter les différents points de l'espace à un objet formant obstacle et de les localiser dans une zone déterminée, allant par exemple de 5 à 100 mètres.

A cet effet, le procédé de détection d'obstacles de l'invention comprend les caractéristiques énoncées dans la partie caractérisante de la revendication 1. L'invention concerne également un dispositif selon la revendication 12.

Avantageusement, l'émission impulsionnelles des ondes incidentes précitées est effectuée pendant la trame impaire de chaque image vidéo et l'inscription des données télémétriques est effectuée pendant la trame paire suivante de l'image.

Selon une autre caractéristique de l'invention, l'émission impulsionnelle des ondes incidentes s'effectue à une première fréquence d'horloge déterminée obtenue à partir de la fréquence du signal de synchronisation de ligne; au moins les données télémétriques relatives aux distances mesurées des points d'impact sont numérisées pendant la trame impaire d'émission des ondes impulsionnelles à une fréquence d'échantillonnage égale à la première fréquence d'horloge ; les données télémétriques numérisées sont mémorisées pendant ladite trame par une combinaison de la première fréquence d'horloge et d'une seconde fréquence d'horloge, de préférence double de la première, afin d'éviter des conflits de données ; et l'écriture des données numérisées est commandée pendant la trame paire suivante sur un certain nombre de lignes vidéo consécutives de la trame paire à une troisième fréquence d'horloge obtenue à partir de la fréquence du signal de synchronisation de ligne et supérieure aux première et seconde fréquences d'horloge.

Les ondes impulsionnelles precitées balaient horizontalement une ligne télémétrique de la scène pendant une trame impaire à la première fréquence d'horloge et le faisceau d'ondes impulsionnelles est dévié verticalement et horizontalement pendant la trame paire suivante à une position de début de balayage d'une ligne télémétrique suivante, ce balayage étant effectué pendant la trame impaire d'une image vidéo suivante.

De préférence, uniquement les valeurs en coordonnées $\theta x$, $\theta y$ de la position de départ de chaque balayage d'une ligne télémétrique sont numérisées et mémorisées en fin de trame paire et les positions des différents points d'impact des ondes impulsionnelles consécutives sont reconstituées automatiquement à partir d'une courbe de balayage préétablie, de préférence en rampe.

Selon encore une autre caractéristique de l'invention, un signal de selection du nombre de lignes vidéo précitées sur lesquelles sont écrites les données télémétriques est produit au début de chaque trame paire et, peu après ce signal de sélection, un signal de validation d'écriture des données télémétriques sur les lignes vidéo sélectionnées est produit.

Avantageusement, les lignes vidéo précitées où sont inscrites les données télémétriques se trouvent à la partie supérieure de l'image vidéo après plusieurs lignes forcées au noir et une ligne forcée au blanc de démarrage général, et comprennent une ligne pour le numéro d'identification de l'image vidéo et les lignes proprement dites d'écriture des données télémétriques.

Les données télémétriques et le signal de l'image vidéo sont enregistrées sur un dispositif d'enregistrement, tel qu'un magnétoscope, ou les données télémétriques et le signal de l'image vidéo sont traités en temps réel.

Les points d'impact des ondes impulsionnelles incidentes sont disposés en quinconce par décalage temporel d'une ligne télémétrique sur deux au départ de chaque balayage horizontal.

L'invention propose également un dispositif de détection d'obstacles pour la mise en oeuvre du procédé ci-dessus défini.

Le dispositif conforme à l'invention est caractérisé en ce qu'il comprend une caméra vidéo embarquée sur le véhicule pour la prise de vues d'une scène en face du véhicule ; un appareil télémétrique de mesure de la distance d'obstacles de la scène relativement au véhicule ; un ensemble de déviation du rayonnement impulsionnel émis par l'appareil télémétrique à au moins un miroir mobile de déflexion commandé pour amener le rayonnement à effectuer un mouvement de balayage de lignes horizontales télémétriques successives de la scène ; et un conditionneur de signaux adapté pour produire, à partir des signaux de synchronisation de trame et de ligne d'un signal vidéo de la caméra, des signaux permettant la commande, dans une même trame impaire, de l'émission du rayonnement impulsionnel et du mouvement de balayage horizontal du miroir et des signaux aptes à inscrire pendant la trame paire suivante sur des lignes successives de l'image vidéo des données télémétriques relatives aux coordonnées des points d'impact du rayonnement impulsionnel sur les obstacles de la scène et à la distance mesuree de chaque point d'impact relativement au véhicule.

De préférence, le dispositif comprend deux miroirs mobiles de déviation respectivement horizontale et verticale du rayonnement impulsionnel commandés pendant chaque trame paire suivant une trame impaire de balayage horizontal de façon à être amenés à une position de début de balayage d'une nouvelle ligne télémétrique.

Le conditionneur précité comprend des circuits spécialisés et une logique combinatoire permettant d'extraire du signal vidéo fourni par la caméra précitée des signaux de synchronisation de trame et de ligne et de détermination de début et de fin de trames pour commander en début d'une trame paire d'une image vidéo le déplacement des miroirs de déviation horizontale et verticale à la position de début de balayage précitée et en début de trame impaire suivante de l'image vidéo suivante, le déplacement du miroir de déviation horizcntale pour balayer une ligne télémétrique ; un circuit à boucle verrouillée en phase et un certain nombre de circuits diviseurs pilotés par les signaux de synchronisation de ligne pour produire un premier signal d'horloge de commande d'émission du rayonnement impulsionnel et de numérisation des données télémétriques, un second signal d'horloge, de préférence de fréquence double de celle du premier signal d'horloge, pour mémoriser les données télémétriques dans une mémoire et un troisième signal d'horloge de commande d'écriture des données télémétriques sur l'image vidéo.

Le conditionneur comprend de plus des circuits électroniques adaptés pour produire un premier signal apparaissant avant le début d'une trame impaire et se terminant avec la trame impaire pour définir une fenêtre autorisant le prélèvement des données relatives aux positions de départ des miroirs de déviation verticale et horizontale avant balayage d'une ligne télémétrique, le balayage horizontal, l'émission du rayonnement impulsionnel et l'incrémentation du miroir de balayage vertical à une ligne télémétrique suivante ; un second signal émis après le début de chaque trame paire permettant la sélection du nombre de lignes vidéo sur lesquelles sont écrites les données télémétriques ; et un troisième signal émis peu après l'apparition du second signal pour valider l'écriture des données télémétriques sur les lignes vidéo sélectionnées.

Le conditionneur comprend de plus un étage de verrouillage ou de clamping permettant de produire des impulsions dites de clamp pour un alignement correct des signaux vidéo et télémétriques.

Avantageusement, le dispositif comprend un moyen de découplage, tel qu'un cache en forme de plaque, de l'émission de la réception du rayonnement impulsionnel jusqu'au niveau des miroirs précités.

De préférence, l'appareil télémétrique précité est du type à laser.

Le dispositif comprend de plus un ordinateur embarqué sur le véhicule exploitant les données télémétriques et les données vidéo et élaborant des signaux destinés à commander des organes de sécurité du véhicule.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels:

La figure 1 représente schématiquement en vue de dessus le dispositif de détection d'obstacles conforme à l'invention permettant dans le cas présent trois niveaux d'observation d'obstacles situés respectivement dans trois plans différents.

La figure 2 est une vue schématique en perspective du dispositif de détection d'obstacles conforme à l'invention.

La figure 3 représente des tranches $\Delta$ d'images télémétriques obtenues par balayage de portions d'espace correspondantes par un faisceau laser.

La figure 4 est une vue agrandie de la partie cerclée en IV de la figure 3.

La figure 5 représente un schéma synoptique fonctionnel du conditionneur de signaux utilisé dans le dispositif de l'invention.

La figure 6 est une vue schématique de dessus représentant un moyen de découplage utilisé avec un appareil télémétrique du dispositif de l'invention.

La figure 7 est une vue suivant la flèche VII de la figure 6.

La figure 8 représente des signaux de commande et de la fenêtre produits par le conditionneur de signaux de la figure 5.

La figure 9 représente l'échantillonnage de données télémétriques par des circuits du conditionneur de la figure 5.

La figure 10 représente un exemple de format de codage de données télémétriques.

En se reportant aux figures, le dispositif 1 de détection d'obstacles en avant d'un véhicule automobile (non représenté) comprend une caméra vidéo 2 embarquée sur le véhicule de façon à fournir un signal vidéo composite représentatif d'une image vidéo d'une scène se déroulant devant le véhicule ; un appareil télémétrique 3 également embarqué sur le véhicule permettant de mesurer des distances d'obstacles de la scène relativement au véhicule par émission et réception d'un rayonnement impulsionnel ; un conditionneur 4 de signaux, dont les fonctions seront explicitées ultérieurement ; et un ensemble 5 à miroirs respectivement de déviation horizontale 6 et de déviation verticale 7 du faisceau ou rayonnement de l'appareil télémétrique 3 et commandée par des signaux appropriés provenant du conditionneur de signaux 4.

La caméra 2 est du type classique CCD en noir et blanc au standard européen CCIR, telle que celle portant la référence IVC 500 de la Société française I2S France. La caméra 2 est équipée d'un objectif de distance focale de 16 mm permettant une observation sensiblement équivalente au champ de vision humaine. Dans le cas présent, l'image vidéo de la caméra 2 est numérisée de façon à obtenir une image de luminance de 512 x 512 éléments d'image ou pixels qui sont codés de préférence sur 8 bits.

L'appareil télémétrique 3 permet d'effectuer une mesure de distance sans contact d'objets ou obstacles en avant du véhicule. Trois techniques de télémétrie sont utilisées actuellement et font appel aux hyperfréquences, aux ultrasons et aux ondes lumineuses ou infrarouges selon que les appareils télémétriques correspondants fonctionnent dans le visible ou l'infrarouge. Dans le cadre de la présente invention, la télémétrie type laser a été retenue car elle permet une très bonne résolution spatiale, caractéristique essentielle à l'obtention d'une bonne image télémétrique.

L'appareil télémétrique 3 fonctionne suivant le principe de la mesure du temps de vol, c'est-à-dire, après émission d'une onde impulsionnelle en direction d'une cible, du temps nécessaire à l'onde pour revenir à un élément capteur de l'appareil télémétrique, après avoir frappé la cible, qui est proportionnel au double de la distance à mesurer. Comme appareil télémétrique fonctionnant suivant ce principe, on utilise le télémètre type LD 90-25S fabriqué par la Société autrichienne RIEGL, qui présente les caractéristiques suivantes :

- laser à semi-conducteur ; diode As Ga,
- longueur d'onde : 905nm,
- durée d'émission : 35ns,
- puissance crête : 15W,
- diamètre du faisceau laser en sortie : 25mm,
- divergence du faisceau : 3,3mrd (impact de 35cm de diamètre à une distance de 100m),
- étendue de mesure : 2 à 100m.
- précision : +10cm, +0,1% de la distance mesurée,
- sécurité : classe 3B.

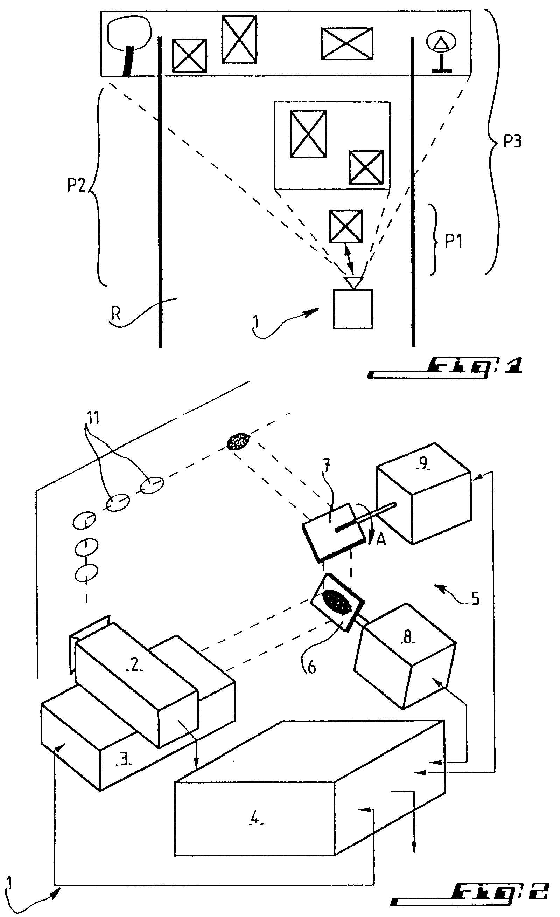

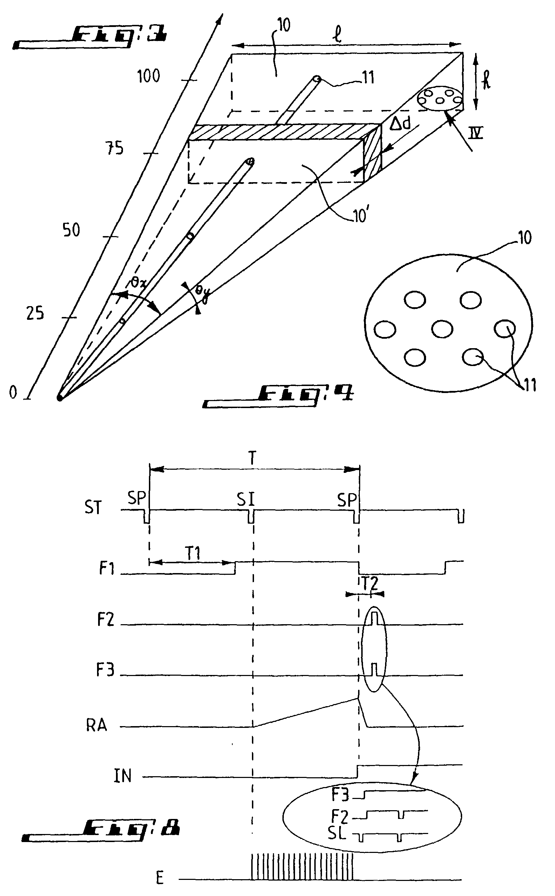

L'ensemble 5 couplé à l'appareil télémétrique 3 permet d'obtenir une image télémétrique synchronisée avec l'image vidéo de la caméra de dimensions déterminées en balayant horizontalement et verticalement la scène en face du véhicule par le faisceau ou rayonnement laser issu de l'appareil télémétrique 3 à l'aide des miroirs 6 et 7 qui sont traités à l'aluminium et protégés par de la silice. Ces miroirs 6, 7 sont à commande galvanométrique, par exemple celle commercialisée sous la référence EXY 5067V de la Société General Scanning résidant aux Etats Unis et deux modules électroniques, par exemple du type CX 660 de cette même Société, pilotent l'asservissement de l'angle de déviation des miroirs 6.7 à une tension de commande. L'ensemble constitué par les modules électroniques et la commande galvanométrique est représenté par les deux blocs de la figure 2 portant les références 8 et 9. Par la commande galvanométrique et l'asservissement ci-dessus connus, le faisceau laser peut subir une déviation maximale de ± 20° aussi bien dans le sens vertical que dans le sens horizontal avec un temps de réponse voisin de 15ms. La déflexion par miroirs à commande galvanométrique a été choisie car l'amplitude des déviations ou déflexions est entièrement programmable et elle autorise de plus la visée d'un point particulier et aléatoire de la scène, particularité qui est aussi intéressante notamment pour le suivi d'un véhicule précédant le véhicule sur lequel est embarqué le dispositif de l'invention et susceptible de constituer un obstacle potentiellement dangereux.

Ainsi, la commande galvanométrique des miroirs 6, 7 permet d'obtenir aisément différents formats d'images télémétriques. Compte tenu des caractéristiques imposées par l'appareil télémétrique 3 (fréquence maximum des tirs laser, diamètre du faisceau laser impliquant des miroirs de grandes dimensions), l'ensemble de déviation 5 (temps de réponse des miroirs 6, 7 liés à leur dimension permettant la déflexion simultanée émission - réception du faisceau laser), et par la bande passante d'un magnétoscope sur une cassette duquel sont enregistrées éventuellement les données télémétriques inscrites sur une image vidéo comme cela sera expliqué ultérieurement, l'image télémétrique obtenue par le balayage vertical et horizontal du faisceau laser a été choisie comme ayant de préférence un format formant une matrice de 10 lignes télémétriques et de 20 points par ligne. Comme cela sera précisé ultérieurement, une ligne télémétrique de 20 points est obtenue pendant une trame d'une image vidéo de la caméra 2, soit pendant 20ms pour des fréquences de tirs laser de 1 KHz, la trame suivante de cette même image étant utilisée pour mixer à l'image vidéo les données télémétriques. Une ligne télémétrique de 20 points est ainsi obtenue toutes les deux trames et l'image télémétrique complète de 10 lignes est donc obtenue en 400ms soit à une fréquence de 2,5 Hz.

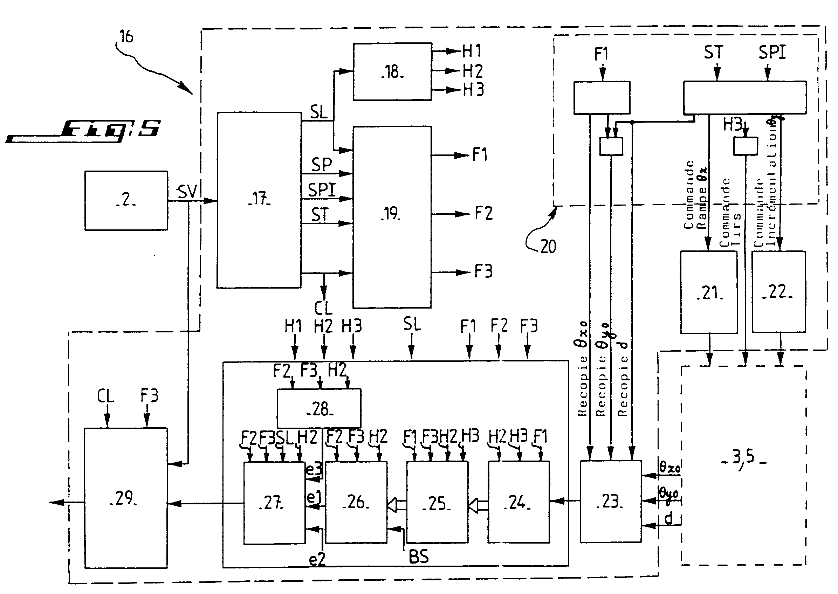

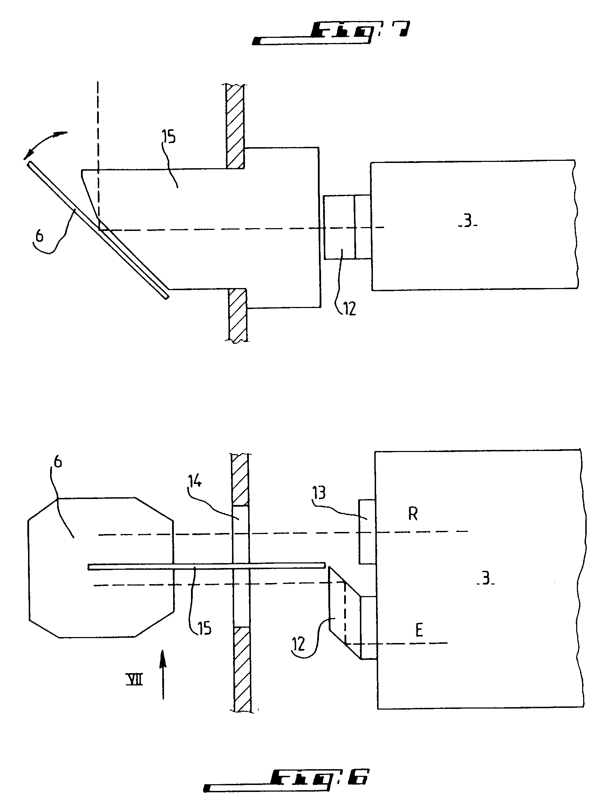

Dans l'hypothèse où le véhicule se déplace sur une autoroute à quatre voies, la dimension de l'image télémétrique à 100 m du véhicule est conditionnée par les normes de construction de cette autoroute, ce qui se traduit dans le cas présent par une largeur roulable d'environ 20 m à 100 m du véhicule. Dans ces conditions les angles de balayage horizontal $\theta x$ et vertical $\theta y$ sont choisis de façon à couvrir à 100 m du véhicule une zone 10 d'une largeur $\ell$ d'environ 20 mètres et d'une hauteur h d'environ 5 mètres. Pour couvrir une telle zone 10, les valeurs angulaires de balayage $\theta x$ et $\theta y$ sont respectivement de 11° et de 3°, ce qui correspond en pratique à une zone, située à 100 m du véhicule, d'une largeur $\ell$ = 19 m et d'une hauteur h = 5,2 m. La figure 4 montre différents points d'impact 11 du faisceau laser sur le plan vertical contenant la zone 10 d'image télémétrique définie ci-dessus. Ces points d'impact 11 sont de forme sensiblement circulaire et ont un diamètre d'environ 35 cm pour les valeurs d'angle $\theta x$ et $\theta y$ définies ci-dessus. Pour ces mêmes valeurs d'angle de balayage, la zone 10' scrutée par le faisceau laser pour donner une image télémétrique située à environ 80 m du véhicule aura une largeur $\ell$ = 15,4 m et une hauteur h = 4,2 m. En fait, ces valeurs d'angle de balayage correspondent à un petit balayage utilisé pour des véhicules situés devant le véhicule comportant le dispositif de l'invention. au-delà de 50 m. Pour des véhicules situés à une distance en dessous de 50 mètres, il est préférable d'accomplir un balayage horizontal et vertical à des valeurs angulaires plus importantes que celles précédemment définies. En pratique, il s'est avéré intéressant d'utiliser à cet effet ne valeur de balayage horizontal $\theta x$ = 20° et une valeur de balayage vertical $\theta y$ = 5°, ce qui permet de scruter, pour une zone 10 située à 30 m en avant du véhicule, une image télémétrique ayant une largeur $\ell$ = 10,6 m et une hauteur h = 2,6 m. Le choix entre le grand balayage et le petit balayage peut s'effectuer manuellement par le conducteur ou automatiquement à partir des valeurs de distances de points d'impact mesurées par l'appareil télémétrique 3.

La figure 1 illustre trois niveaux d'observation possibles d'une scène par le dispositif de détection 1 embarqué sur un véhicule se déplaçant sur une route R. Ainsi, le dispositif 1 permet par un grand et/ou petit balayage et à partir de la fusion des informations vidéo et des informations télémétriques comme cela sera détaillé plus loin, d'analyser globalement la scène dans le plan P3, de détecter des obstacles potentiellement dangereux dans le plan P2 et de détecter l'obstacle le plus dangereux dans le plan P1 avec, dans cette dernière situation, asservissement des tirs télémétriques sur cet obstacle afin d'informer le conducteur ou d'agir sur les organes de sécurité du véhicule.

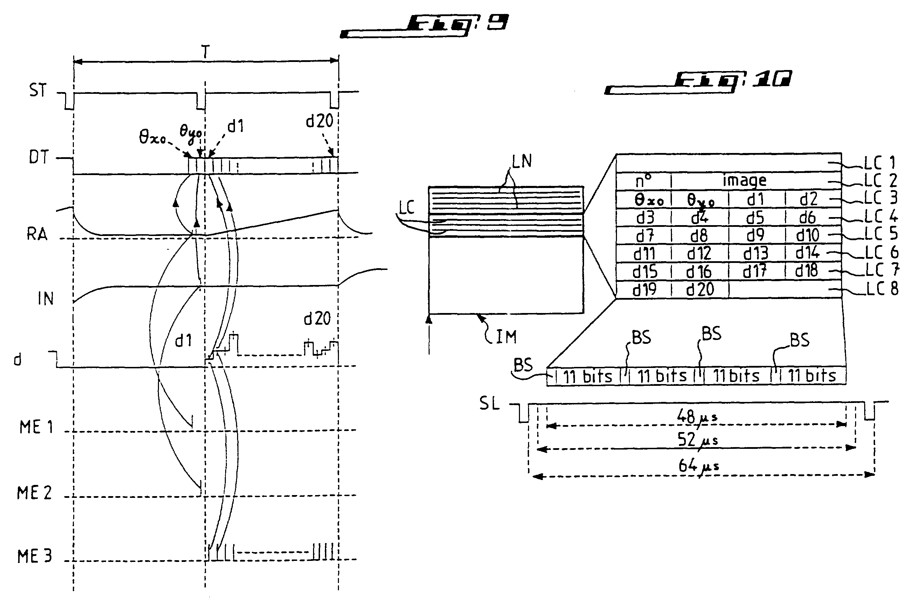

L'appareil télémétrique 3 comprend deux optiques 12, 13 au travers desquelles s'effectuent respectivement l'émission et la réception du faisceau laser. L'optique 12 est de plus adaptée de façon à réduire l'entraxe des faisceaux d'émission et de réception comme représenté en figure 6. L'émission et la réception du faisceau laser exigent un diamètre minimum de 50 mm de la pupille d'entrée 14 de l'ensemble de déviation du faisceau.

Afin de ne pas faire chuter les performances intrinsèques de l'appareil télémétrique 3, qui se traduisent par une diminution considérable de la portée passant de 85 m (appareil télémétrique seul) à 6 m environ (appareil télémétrique avec ensemble de déviation), il est nécessaire de découpler, à l'aide d'un cache 15, l'émission de la réception jusqu'au niveau du miroir 6. Sans ce cache de découplage 15, l'optique de réception receuillerait une partie de l'énergie du faisceau d'émission provoquant ainsi un mauvais fonctionnement de l'appareil télémétrique 3.

Le circuit 16 du conditionneur de signaux 4 de la figure 2 va être maintenant détaillé en référence à la figure 5.

Le circuit 16 comprend un circuit 17 recevant le signal vidéo composite SV de la caméra vidéo 2 et permettant d'extraire du signal SV un signal de fréquence de lignes SL, un signal de synchronisation de trame ST, un signal SPI identifiant une trame paire ou impaire, des signaux de début d'une trame paire SP ou tops de trame paire et des impulsions dites de clamping CL, dont le rôle sera expliqué ultérieurement. Des circuits accomplissant la fonction d'extraction de signaux de synchronisation du signal vidéo SV sont déjà connus en soi et utilisent par exemple des circuits spécialisés ainsi qu'une logique combinatoire.

Le circuit 16 comprend également un circuit électronique 18 recevant le signal de fréquence de ligne SL et adapté pour produire un premier signal d'horloge H1, par exemple d'une fréquence de 1 KHz, cadençant l'émission impulsionnelle du faisceau laser et permettant de numériser les données télémétriques représentatives des distances mesurées d'obstacles et des coordonnées en $\theta x$, $\theta y$ des points d'impact des ondes impulsionnelles incidentes respectivement sur les obstacles ; un second signal d'horloge H2 utilisé pour mémoriser les données télémétriques et ayant de préférence une fréquence double de celle du signal H1 et qui, combiné avec H1, permet de mémoriser les données télémétriques sans conflit ; et un troisième signal d'horloge H3, de préférence d'une fréquence de 1 MHz, commandant l'écriture des données télémétriques sur l'image vidéo comme cela sera expliqué ultérieurement. Le circuit électronique 18 peut être constitué d'un étage à boucle verrouillée en phase (PLL) piloté par le signal SL et d'une série de diviseurs. Des circuits utilisant un circuit PLL et des diviseurs pour produire différents signaux d'horloge ont déjà été conçus dans le domaine de la télévision et n'ont pas à être d'avantage détaillés. De préférence, l'émission des ondes impulsionnelles du faisceau laser à la fréquence du signal d'horloge H1 est effectuée pendant chaque trame impaire de l'image vidéo de la caméra 2 et l'inscription ou écriture des données télémétriques sur l'image vidéo est effectuée pendant la trame paire suivante.

Le circuit 16 comprend également un circuit électronique 19 permettant d'obtenir à partir des signaux SL, SP, SPJ et ST des signaux de fenêtre comprenant un premier signal de fenêtre F1 d'une durée de 22 millisecondes autorisant le prélèvement ou la recopie des données relatives aux positions de départ des miroirs 6, 7 de déviation verticale et horizontale avant balayage d'une ligne télémétrique, le balayage linéaire horizontal $\theta x$, ensuite l'émission des ondes impulsionnelles ou tirs laser et enfin l'incrémentation linéaire IN, effectuée de bas en haut par paliers par le miroir de déviation verticale 7, du balayage vertical $\theta y$ ; un deuxième signal de fenêtre F3 d'une durée de 512 microsecondes permettant la sélection d'un certain nombre de lignes vidéo au début de chaque trame paire sur lesquelles doivent être écrites les données télémétriques ; et un troisième signal de fenêtre F2 d'une durée de 48 microsecondes émis après le second signal de fenêtre F3 et validant ou autorisant l'écriture des données télémétriques sur les lignes vidéo sélectionnées par le signal F3. La figure 8 représente plus précisement les positions des signaux de fenêtre F1, F2 et F3 produits de façon synchronisée par les différents signaux de synchronisation reçus par le circuit 19. Ainsi, le signal F1 est produit juste avant l'apparition du signal de début d'une trame impaire SI et se termine en même temps que la trame impaire. Le début du signal F1 est déterminé à l'aide d'un compteur électronique de temps T1 du circuit 19 et déclenché par le front de montée du signal du début de trame paire SP. Bien entendu, la durée du signal F1 avant le début de la trame impaire est choisie de façon à être suffisante pour prélever et mémoriser les positions des miroirs 6, 7 en début de chaque ligne télémétrique. Le signal de fenêtre F3 est produit peu après le début de chaque trame paire (à l'aide d'un autre compteur de temps T2 du circuit 19) et le signal de fenêtre F2 est émis peu après le signal F3 avec une durée de chaque impulsion de ce signal moindre (48 µs) que la durée d'une ligne (64 µs).

La figure 8 montre egalement l'émission E d'ondes impulsionnelles du faisceau laser ou tirs télémétriques pendant une trame impaire d'une durée égale à T/2, soit 20 millisecondes, à la fréquence du signal d'horloge H1. Ainsi, pendant cette trame impaire, 20 tirs télémétriques sont effectués, ce qui correspond à 20 points d'impacts du faisceau laser pour une ligne télémétrique.

Le circuit 16 comprend de plus un circuit électronique 20 recevant le signal d'horloge H1, le signal de fenêtre F1, le signal de synchronisation de trame ST et le signal de trame paire/impaire SPI et permettant de prélever et mémoriser les positions de départ des miroirs 6, 7 avant balayage d'une ligne télémétrique et commander, pendant chaque trame impaire, les miroirs 6, 7 de façon que le faisceau laser balaie chaque ligne télémétrique et les tirs télémétriques E à la fréquence d'horloge H1. Ainsi, au début d'une trame impaire, le circuit 20 fournit un signal de commande à un circuit 21 de formation d'un signal de rampe appliqué au bloc en pointillés de la figure 5 et comprenant l'appareil télémétrique 3 auquel est couplé l'ensemble de balayage 5 pour commander le pivotement du miroir 6 de façon à balayer une ligne télémétrique horizontale par le faisceau laser. Le circuit 20, au début de la trame paire suivant la trame impaire précitée, fournit une impulsion de commande à un circuit 22 appliquant 1. l'ensemble de balayage 5 un signal d'incrémentation IN de façon à faire pivoter le miroir 7 dans le sens indiqué par la flèche A de la figure 2 d'un angle de rotation correspondant à un palier de déplacement vers le haut suivant l'axe des ordonnées d'un palier correspondant à la valeur d'incrémentation. Le circuit 20 fournit également à l'ensemble de balayage 5 et. à l'appareil télémétrique 3 des signaux de commande des tirs télémétriques à la fréquence du signal d'horloge H1 et ce pendant chaque trame impaire. L'image télémétrique de 10 lignes à 20 impacts par ligne est réalisée comme cela résulte déjà de ce qui précède en choisissant un balayage linéaire de gauche à droite pour le miroir de déviation horizontale 6 et une incrémentation linéaire de bas en haut en 10 paliers pour le miroir de déviation verticale 7. Pour des raisons liées au temps de réponse des miroirs 6, 7, ces derniers sont commandés dès le début de la trame paire suivant la trame impaire de balayage $\theta x$ de façon que leurs positions de départ $\theta xO$ et $\theta yO$ de début de balayage de chaque ligne télémétrique soient parfaitement stabilisées à la fin de trame paire. La figure 9 représente à la ligne des données télémétriques DT les deux positions de départ $\theta xO$ et $\theta yO$ des miroirs 6 et 7. Les données télémétriques DT représentatives des positions des impacts laser sur la cible et des distances $\underline{d}$ de la cible à l'appareil télémétrique 3 sont échantillonnées et mémorisées pendant le signal de fenêtre F1 et dans l'ordre suivant :

$$\theta xO' \; \theta yO' \; di \; \text{avec } 1 < i < 20.$$

A cet effet, les valeurs $\theta xO'$, $\theta yO'$ et d, qui sont des tensions analogiques, images respectivement des positions des miroirs 6, 7 de balayage horizontal et vertical et des distances de la cible à l'appareil télémétrique 3, sont appliquées à un circuit multiplexeur 23 qui reçoit successivement du circuit 20 des signaux de commande définis à partir du signal de fenêtre F1 de façon à fournir à sa sortie la valeur de tension analogique $\theta xO$, puis la valeur de la tension analogique $\theta yO$ et enfin les valeurs de tensions analogiques des distances $\underline{d}$ mesurées par l'appareil télémétrique 3 pendant les trames impaires. La sortie du circuit multiplexeur 23 est reliée à l'entrée d'un circuit convertisseur analogique-numérique 24, dont la sortie numérique est appliquée à un circuit mémoire 25. Afin de ne pas détériorer la précision de mesure d de l'appareil télémétrique 3, qui est dans le cas présent de +20 cm pour une image télémétrique située à 100 m de l'appareil télémétrique, et pour tenir compte des valeurs négatives des données télémétriques à convertir sous forme numérique (les valeurs des tensions analogiques sont comprises dans les fourchettes suivantes : $-5 < \theta xO < +5$ volts, $0 < \theta yO < +2,5$ volts, $O < \underline{d} < +10\,O$ volts), la numérisation est effectuée sur 11 bits.

Seule la première valeur de θxO au début de chaque ligne télémétrique est numérisée par le circuit de conversion 24 et mémorisée dans le circuit 25 car le type de balayage horizontal, dans le cas présent en forme de rampe, est connu et permet de reconstituer les 20 positions θxi des points d'impact d'une ligne correspondant aux 20 tirs télémétriques. Bien entendu, tout autre type de balayage horizontal que celui effectué à partir d'un signal de commande en rampe, linéaire ou non linéaire, peut être utilisé, l'essentiel étant qu'il soit parfaitement connu. Avantageusement, les points d'impact 11 des ondes impulsionnelles du faisceau laser sont disposés en quinconce par décalage temporel d'une ligne télémétrique sur deux au départ de chaque balayage horizontal. Autrement dit, la courbe en rampe RA des figures 8 et 9 est décalée (retardée) pour effectuer les tirs en quinconce.

Le circuit mémoire 25 est relié à un circuit convertisseur parallèle-série 26. Lorsque les données télémétriques mémorisées dans le circuit 25 sont extraites de celui-ci pour être incrustées ou écrites sur l'image vidéo comme cela va être décrit ci-dessous, chaque donnée télémétrique de 11 bits est précédée d'un bit du start BS appliqué au circuit convertisseur parallèle-série 26.

L'écriture des mots de 12 bits en sortie du circuit convertisseur 26 sur l'image vidéo doit être effectuée à la fréquence du signal d'horloge H3 de 1MHz, donc à une période de 1 microseconde. Dans la mesure où une ligne vidéo, selon le standard SECAM, a une durée de 64 microsecondes, quatre mots de 12 bits (soit 48 microsecondes) au maximum peuvent être écrits sur une ligne vidéo comme cela ressort d'ailleurs de la figure 10. Pour incruster toutes les données télémétrique DT, obtenues pendant une trame impaire, six lignes vidéo consécutives de la trame paire suivant cette trame impaire (l'incrustation s'effectuant au début de la trame paire) sont nécessaires. L'incrustation des données télémétriques s'effectue suivant un codage binaire simple. Par exemple le niveau logique "1" est représenté sur une image vidéo par un blanc vidéo et le niveau logique "O" est représenté par le noir vidéo. Chaque état logique a une durée de 1 microseconde et correspond à 10 éléments d'image ou pixels pour une image vidéo numérisée dans le format 512x512 éléments d'image. Autrement dit, aux quatre données télémétriques de 12 bits chacune qui sont écrites sur une ligne vidéo correspondent 480 éléments d'image d'une ligne vidéo.

Le circuit 26 est relié à une entrée e1 d'un circuit multiplexeur 27 qui reçoit à une autre entrée e2 un niveau logique "1" correspondant à une ligne blanche vidéo servant de démarrage général. Cette ligne blanche vidéo précède, sur l'image vidéo, une ligne réservée à la numérotation et donc à l'indentification de chaque image vidéo. Chaque numéro d'image vidéo codé numériquement est appliqué à une troisième entrée e3 du circuit multiplexeur 27 par un circuit de codage approprié 28. La figure 10 représente le format de codage des données télémétriques sur une image vidéo IM. Cette image comporte à sa partie supérieure un certain nombre de lignes forcées au noir LN suivies de 8 lignes de codage LC comprenant de haut en bas une ligne forcée au blanc LC1 servant de démarrage général, la ligne LC2 de numérotation de l'image vidéo IM et les six lignes LC3 à LC8 de codage des données télémétriques d'une ligne télémétrique.

Les données numériques télémétriques multiplexées en sortie du circuit 27 constituent un signal aux normes vidéo (0 - 0,7V) et sont appliquées à un circuit mélangeur vidéo 29 qui reçoit également le signal de l'image vidéo provenant de la caméra vidéo 2. Au circuit mélangeur 29 sont appliqués le signal de fenêtre F3 permettant de sélectionner au début de chaque trame paire les lignes vidéo pour l'écriture des données télémétriques et le signal dit de clamp CL reçu par un étage de clamping dans le circuit mélangeur 29 pour un alignement correct des signaux vidéo et télémétriques. La sortie du circuit mélangeur 29 est reliée à un dispositif d'enregistrement standard tel qu'un magnétoscope, des signaux vidéo et données télémétriques pour une analyse et un traitement du différés de ces signaux. Cependant, la sortie du circuit mélangeur 29 peut être reliée à un dispositif ordinateur embarqué sur le véhicule pour traiter en temps réel les signaux vidéo et télémétriques de façon à produire des signaux destinés notamment à commander des organes de sécurité du véhicule en fonction du résultat de traitement de ces données.

Le circuit 20 est constitué de modules d'adaptation et de mise en forme de signaux, par exemple à base de portes logiques, afin d'obtenir les différents signaux de commande mentionnés précédemment. Un tel circuit peut être aisément conçu par un homme de métier compte-tenu des fonctions simples qui lui sont assignées.

Le fonctionnement du dispositif 1 de détection d'obstacles résulte en grande partie de la description qui en a été faite ci-dessus et va être maintenant résumé en référence notamment aux figures 8 et 9.

Pendant une trame paire d'une image vidéo, les miroirs 6, 7 sont commandés de façon à être amenés à une position de début de balayage horizontal d'une ligne télémétrique de la scène observée par la caméra vidéo 2, position représentée par les valeurs θxO et θyO et mémorisées dans le circuit 25 au début du signal de fenêtre F1 avant le début de la trame impaire suivante. La mémorisation de ces données est indiquée en ME1 et ME2 à la figure 9. Dès le début de la trame impaire, l'émission des ondes impulsionnelles du faisceau laser ou tirs télémétriques est commandée à la fréquence du signal d'horloge H1 de façon synchrone avec le balayage horizontal du miroir 6 pendant la trame impaire. Pendant cette trame, les données télémétriques relatives aux distances d mesurées par l'appareil télémétrique 3 sont échantillonnées et mémorisées dans la mémoire 25 comme indiqué par la ligne ME3 en figure 9. Au début de la trame paire suivante, les signaux de fenêtre F3 et F2 sont produits de façon à permettre l'écriture des données télémétriques DT sur les lignes vidéo de l'image vidéo correspondante sélectionnées par le signal de fenêtre F3 et les miroirs 6, 7 sont commandés pour être positionnés à une position de balayage de la ligne télémétrique suivante et l'échantillonnage et la mémorisation des données télémétriques θxO, θyO, d se répètent pendant la trame impaire suivante. Les données télémétriques incrustées sur les images vidéo sont traitées notamment par le dispositif ordinateur embarqué sur le véhicule afin de donner une information au conducteur ou d'agir sur les organes de sécurité du véhicule lorsqu'un obstacle potentiellement dangereux situé très proche en avant du véhicule est détecté. Dans ce cas, il est possible de prévoir un circuit électronique d'asservissement des tirs télémétriques sur l'obstacle dangereux afin d'assurer une sécurité de conduite maximum au conducteur.

La combinaison d'une caméra vidéo et d'un appareil télémétrique couplé à un dispositif de déflexion X-Y du rayonnement de l'appareil télémétrique permet de fournir, en parfait synchronisme à partir notamment des signaux de synchronisation de trame et de ligne du signal vidéo de la caméra, une image vidéo sur laquelle sont incrustées des données télémétriques permettant de localiser très précisément des objets distants du véhicule dans une zone allant d'environ 5 à 100 m. Le codage et et le mixage des informations télémétriques sur l'image vidéo permettent la réalisation d'un dispositif de détection d'une structure et d'un fonctionnement simples du point de vue électronique, l'enregistrement sur tout magnétoscope standard des données synchronisées image vidéo- image télémétrique pour un traitement en différé, et une exploitation en temps réel de ces images par un système d'analyse d'image embarqué sur le véhicule.

## Revendications

1. Procédé de détection d'obstacles présents devant notamment un véhicule automobile, consistant à fournir à l'aide d'une caméra vidéo (2) embarquée sur le véhicule un signal vidéo composite représentatif d'une image vidéo d'une scène en face du véhicule; à mesurer des distances d'obstacles de la scène relativement au véhicule à l'aide d'un appareil télémétrique (3) également embarqué sur le véhicule et dont les ondes impulsionnelles incidentes balaient la scène suivant des lignes télémétriques horizontales successives; et à synchroniser l'émission impulsionnelle des ondes incidentes et le balayage de celles-ci à partir des signaux de synchronisation de trame et de ligne extraits du signal vidéo, caractérisé en ce qu'il consiste à inscrire ou incruster sur l'image vidéo de façon synchronisée les données télémétriques de l'appareil télémétrique (3), représentatives des distances mesurées d d'obstacles et des coordonnées (θx, θy) des points d'impact (11) des ondes impulsionnelles incidentes respectivement sur les obstacles.

2. Procédé selon la revendication 1, caractérisé en ce que l'émission impulsionnelle des ondes incidentes précitées est effectuée pendant chaque trame impaire de l'image vidéo et l'inscription des données télémétriques (DT) est effectuée pendant la trame paire suivante de l'image.

3. Procédé selon la revendication 1 ou 2, caractérisé en ce qu'il consiste à effectuer l'émission impulsionnelle des ondes incidentes précitées à une première fréquence d'horloge déterminée (H1) obtenue à partir de la fréquence du signal de synchronisation de ligne (SL), à numériser au moins les données télémétriques relatives aux distances mesurées des points d'impact pendant la trame impaire d'émission des ondes impulsionnelles à une fréquence d'échantillonnage égale à la première fréquence d'horloge (H1); à mémoriser les données télémétriques numérisées pendant la trame impaire à une combinaison de la première fréquence d'horloge (H1) et d'une seconde fréquence d'horloge (H2), de préférence double de la première, afin d'éviter les conflits de données; et à commander l'écriture des données numérisées pendant la trame paire suivante sur un certain nombre de lignes vidéo consécutives de la trame paire à une troisième fréquence d'horloge (H3) obtenue à partir de la fréquence du signal de synchronisation de ligne (SL) et supérieure aux première (H1) et seconde (H2) fréquences d'horloge.

4. Procédé selon l'une des revendications précédentes, caractérisé en ce que les ondes impulsionnelles précitées balaient horizontalement une ligne télémétrique de la scène pendant une trame impaire à la première fréquence d'horloge (H1) et le faisceau d'ondes impulsionnelles est dévié verticalement et horizontalement pendant la trame paire suivante à une position de début de balayage d'une ligne télémétrique suivante, ce balayage étant effectué pendant la trame impaire suivante.

5. Procédé selon la revendication 4, caractérisé en ce qu'il consiste à numériser et mémoriser uniquement, en fin de trame paire, les valeurs de la position de départ de chaque balayage d'une ligne télémétrique et à reconstituer automatiquement les positions des différents points d'impact des ondes impulsionnelles consécutives à partir d'une courbe de balayage préétablie, de préférence en rampe.

6. Procédé selon la revendication 2, caractérisé en ce qu'il consiste à produire, au début de chaque trame paire, un signal de sélection (F3) du nombre de lignes vidéo sur lesquelles sont écrites les données télémétriques (DT) et à produire, peu après le signal de sélection (F3), un signal (F2) de validation d'écriture des données télémétriques (DT) sur les lignes vidéo sélectionnées.

7. Procédé selon la revendication 6, caractérisé en ce que les lignes vidéo précitées où sont inscrites les données télémétriques (DT) se trouvent à la partie supérieure de l'image vidéo (IM) après plusieurs lignes forcées au noir et comprennent de haut en bas une ligne forcée au blanc de démarrage général (LC1), une ligne (LC2) pour le numéro d'identification de l'image vidéo (IM) et les lignes proprement dites (LC3-LC8) d'écriture des données télémétriques (DT).

8. Procédé selon l'une des revendications précédentes, caractérisé en ce que les données télémétriques (DT) et les données de l'image vidéo sont enregistrées sur un dispositif d'enregistrement, tel qu'un magnétoscope.

9. Procédé selon l'une des revendications 1 à 7, caractérisé en ce que les données télémétriques (DT) et de l'image vidéo sont traitées en temps réel.

10. Procédé selon l'une des revendications précédentes, caractérisé en ce que les points d'impact (11) des ondes impulsionnelles sont disposés en quinconce par décalage temporel d'une ligne télémétrique sur deux au départ de chaque balayage horizontal.

11. Procédé selon l'une des revendications précédentes, caractérisé en ce que les données télémétriques (DT) sont numérisées sur 11 bits avec un bit supplémentaire de départ.

12. Dispositif de détection d'obstacles pour la mise en oeuvre du procédé tel que défini aux revendications 1 à 11, caractérisé en ce qu'il comprend une caméra vidéo (2) embarquée sur le véhicule pour la prise de vues d'une scène en face du véhicule; un appareil télémétrique (3) de mesure de la distance d d'obstacles de la scène relativement au véhicule; un ensemble (6, 7) de déviation de rayonnement impulsionnel émis par l'appareil télémétrique (3) à au moins un miroir mobile de déflexion (6, 7) commandé pour amener le rayonnement à effectuer un mouvement de balayage de lignes horizontales télémétriques successives de la scène; et un conditionneur de signaux (16) adapté pour produire, à partir des signaux de synchronisation de trame (ST) et de ligne (SL) d'un signal vidéo de la caméra (2), des signaux permettant la commande, dans une même trame impaire, de l'émission du rayonnement impulsionnel et du mouvement de balayage horizontal du miroir (6; 7) et des signaux aptes à inscrire pendant la trame paire suivante sur des lignes vidéo successives de l'image vidéo des données télémétriques (DT) relatives aux coordonnées des points d'impact (11) du rayonnement impulsionnel sur les obstacles de la scène et à la distance mesurée d de chaque point d'impact (11) relativement au véhicule.

13. Dispositif selon la revendication 12, caractérisé en ce qu'il comprend deux miroires mobiles (6, 7) de déviation respectivement horizontale et verticale du rayonnement impulsionnel et qui sont commandés pendant chaque trame paire suivant une trame impaire de balayage horizontal de façon à être amenés à une position de début de balayage d'une nouvelle ligne télémétrique.

14. Dispositif selon la revendication 13, caractérisé en ce que le conditionneur (16) précité comprend des circuits spécialisés et une logique combinatoire permettant d'extraire du signal vidéo fourni par la caméra (2) précitée des signaux de synchronisation de trame (ST) et de ligne (SL) et de détermination de début et de fin de trame pour commander au début d'une trame paire d'une image vidéo le déplacement des miroirs de déviation horizontale et verticale à la position de début de balayage et en début de trame impaire suivante de l'image vidéo suivante, le déplacement du miroir (6) pour effectuer le balayage d'une nouvelle ligne télémétrique.

15. Dispositif selon les revendications 12 à 14, caractérisé en ce que le conditionneur (16) précité comprend de plus des circuits électroniques adaptés pour produire un premier signal (F1) apparaissant avant le début d'une trampe impaire et se terminant avec la trame impaire pour définir une fenêtre autorisant le prélèvement des données relatives aux positions de départ des miroirs de déviation verticale et horizontale (6, 7) avant balayage d'une ligne télémétrique, le balayage horizontal, l'émission du rayonnement impulsionnel et l'incrémentation du miroir de balayage vertical à une ligne télémétrique suivante; un second signal (F3) émis après le début de chaque trame paire permettant la sélection du nombre de lignes vidéo sur lesquelles sont écrites les données télémétriques et un troisième signal (F2) émis peu après l'apparition du second signal (F3) pour valider l'écriture des données télémétriques (DT) sur chaque ligne sélectionnée.

16. Dispositif selon l'une des revendications 12 à 15, caractérisé en ce que le conditionneur (16) précité comprend également un étage de verrouillage ou de clamping permettant de produire des impulsions de clamp pour un alignement correct des signaux vidéo et télémétriques.

**17.** Dispositif selon l'une des revendications 12 à 16, caractérisé en ce qu'il comprend un moyen de découplage (15), tel qu'un cache en forme de plaque, de l'émission de la réception du rayonnement impulsionnel jusqu'au niveau des miroirs (6, 7) précités.

**18.** Dispositif selon l'une des revendications 12 à 17, caractérisé en ce que l'appareil télémétrique (3) est du type à laser.

**19.** Dispositif selon l'une des revendications 12 à 18, caractérisé en ce qu'il comprend de plus un ordinateur embarqué sur le véhicule exploitant les données télémétriques (DT) et vidéo et élaborant des signaux destinés à commander des organes de sécurité du véhicule.

**Patentansprüche**

**1.** Verfahren zur Erkennung von Hindernissen, die sich insbesondere vor einem Kraftfahrzeug befinden, bei dem mit Hilfe einer Videokamera (2), die sich an Bord des Fahrzeuges befindet, ein zusammengesetzes Videosignal geliefert wird, das ein Videobild einer Szene vor dem Fahrzeug darstellt, die Entfernungen von Hindernissen der Szene bezogen auf das Fahrzeug mit Hilfe eines Telemetriegeräts (3), das sich ebenfalls an Bord des Fahrzeuges befindet, und dessen einfallende, impulsartige Wellen die Szene gemäß aufeinanderfolgenden horizontalen telemetrischen Linien abtasten, gemessen werden, und bei dem die impulsartige Aussendung der einfallenden Wellen und das Abtasten von diesen ausgehend von Teilbild- und Liniensynchronisationssignalen, die dem Videosignal entnommen sind, synchronisiert wird, dadurch gekennzeichnet, daß es darin besteht, in dem Videobild in synchronisierter Weise die telemetrischen Daten des Telemetriegeräts (3), die gemessenen Entfernungen $\underline{d}$ der Hindernisse darstellen, und die Koordinaten ($\theta x$, $\theta y$) der Auftreffpunkte (11) der einfallenden impulsartigen Wellen bezogen auf die Hindernisse einzuschreiben oder einzuprägen.

**2.** Verfahren nach Anspruch 1, dadurch gekennzeichnet, daß die impulsartige Aussendung der genannten einfallenden Wellen während jedes ungeradzahligen Teilbildes des Videobildes durchgeführt wird und das Einschreiben der telemetrischen Daten (DT) während dem folgenden geradzahligen Teilbild des Bildes durchgeführt wird.

**3.** Verfahren nach Anspruch 1 oder 2, dadurch gekennzeichnet, daß es darin besteht, die impulsartige Aussendung der genannten einfallenden Wellen bei einer ersten bestimmten Taktfrequenz (H1), die von der Frequenz des Liniensynchronisationssignales (SL) ausgehend erhältlich ist, durchzuführen, wenigstens die telemetrischen Daten, die die gemessenen Entfernungen der Auftreffpunkte betreffen, während des ungeradzahligen Teilbildes der Aussendung der impulsförmigen Wellen bei einer ersten Abtastfrequenz zu digitalisieren, die gleich der ersten Taktfrequenz (H1) ist ; die digitalisierten telemetrischen Daten während des ersten ungeradzahligen Teilbildes bei einer Kombination der ersten Taktfrequenz (H1) und einer zweiten Taktfrequenz (H2), die vorzugsweise zweimal so groß ist wie die erste, zu speichern, damit Konflikte der Daten vermieden werden; und das Einschreiben der digitalisierten Daten während des folgenden geradzahligen Teilbildes in einer gewissen Anzahl von aufeinanderfolgenden Videolinien des geradzahligen Teilbildes bei einer dritten Taktfrequenz (H3), die ausgehend von der Frequenz des Liniensynchronisationssignals (SL) gewonnen wurde und größer als die erste (H1) und zweite (H2) Taktfrequenz ist, zu befehlen.

**4.** Verfahren nach einem der vorangehenden Ansprüche, dadurch gekennzeichnet, daß die vorgenannten impulsartigen Wellen horizontal eine telemetrische Linie der Szene während eines ungeradzeiligen Teilbildes bei der ersten Taktfrequenz (H1) abtasten und der Strahl der impulsartigen Wellen vertikal und horizontal während des folgenden geradzahligen Teilbildes bei einer Abtastausgangsposition einer folgenden telemetrischen Linie ausgelenkt wird, wobei diese Abtastung während des folgenden ungeradzahligen Teilbildes durchgeführt wird.

**5.** Verfahren nach Anspruch 4, dadurch gekennzeichnet, daß es darin besteht, lediglich am Ende des geradzahligen Teilbildes die Werte der Ausgangsposition jeder Abtastung einer telemetrischen Linie zu digitalisieren und zu speichern und automatisch die Positionen der verschiedenen Auftreffpunkte der impulsartigen aufeinanderfolgenden Wellen von einer vorher herstellten Abtastkurve, vorzugsweise in Form einer Rampe, ausgehend zu rekonstituieren.

**6.** Verfahren nach Anspruch 2, dadurch gekennzeichnet, daß es darin besteht, zu Beginn jedes geradzahligen Teilbildes ein Selektionssignal (F3) der Zahl der Videolinien zu erzeugen, in die die telemetrischen Daten (DT) eingeschrieben werden und ein wenig nach dem Selektionssignal (F3), ein Signal (F2) zum Gültigwerden des Einschreibens der telemetrischen Daten (DT) in die ausgewählten Videolinien zu erzeugen.

**7.** Verfahren nach Anspruch 6, dadurch gekennzeichnet, daß die vorgenannten Videolinien in die telemetrischen Daten (DT) eingeschrieben worden sind, sich im oberen Bereich des Videobildes (IM) nach mehreren geschwärzten Linien befinden und von oben nach unten eine weiß gemachte allgemeine Startlinie (LC1), eine Linie (LC2) für die Identifikationsnummer des Videobildes (IM) und die Linien (LC3-LC8) zum eigentlichen Einschreiben der telemetrischen Daten (DT) besitzen.

8. Verfahren nach einem der vorangehenden Ansprüche, dadurch gekennzeichnet, daß die telemetrischen Daten (DT) und die Daten des Videobildes in eine Speichervorrichtung, wie ein Magnetoskop, eingespeichert werden.

9. Verfahren nach einem der Ansprüche 1 bis 7, dadurch gekennzeichnet, daß die telemetrischen Daten (DT) zur Echtzeit behandelt werden.

10. Verfahren nach einem der vorangehenden Ansprüche, dadurch gekennzeichnet, daß die Auftreffpunkte (11) der impuls artigen Wellen in Zickzackform durch zeitliche Versetzung einer telemetrischen Linie zur anderen zu Beginn jeder horizontalen Abtastung angeordnet werden.

11. Verfahren nach einem der vorangehenden Ansprüche, dadurch gekennzeichnet, daß die telemetrischen Daten (DT) in 11 Bits mit einem zusätzlichen Startbit digitalisiert werden.

12. Vorrichtung zur Erkennung von Hindernissen zur Durchführung des Verfahrens, wie es in den Ansprüchen 1 bis 11 definiert wird, dadurch gekennzeichnet, daß sie eine Videokamera (2), die sich an Bord des Fahrzeuges zur Bildaufnahme einer Szene vor dem Fahrzeug, ein Telemetriegerät (3) zum Messen der Entfernung $\underline{d}$ von Hindernisen der Szene bezüglich auf das Fahrzeug, eine Einrichtung (6, 7) zur Auslenkung der impulsartigen Strahlung, die von dem Telemetriegerät (3) zu wenigstens einem beweglichen Reflexionsspiegel (6, 7) ausgesendet wird, der gesteuert wird, um die Strahlung dazu zu bringen, eine Bewegung zum Abtasten der horizontalen aufeinanderfolgenden telemetrischen Linien der Szene durchzuführen ; und einen Signalkonditionierer (16) besitzt, der geeignet ist, von dem Teilbild (ST)- und Liniensynchronsignalen (SL) eines Videosignals der Kamera (2) ausgehend, Signale, die die Steuerung in ein und demselben ungeradzahligen Teilbild der Aussendung der impulsartigen Strahlung und der horizontalen Abtastbewegung des Spiegels (6; 7) erlauben und Signale zu erzeugen, die geeignet sind, während des folgenden geradzahligen Teilbildes in die aufeinanderfolgenden Videolinien des Videosignals die telemetrischen Daten (DT), die die Koordinaten der Auftreffpunkte (11) DT impulsartigen Strahlung auf die Hindernisse der Szene und die gemessene Entfernung $\underline{d}$ jedes Auftreffpunktes (11) bezogen auf das Fahrzeug betreffen, einzuschreiben.

13. Vorrichtung nach Anspruch 12, dadurch gekennzeichnet, daß sie zwei bewegliche Spiegel (6, 7) zur Auslenkung der horizontalen bzw. der vertikalen impulsartigen Strahlung besitzt, die während jedes geradzahligen folgenden Teilbildes des einem ungeradzahligen Teilbild der horizontalen Abtastung folgt, so zu steuern, daß sie in die Position des Beginns der Abtastung einer neuen telemetrischen Linie gebracht werden.

14. Vorrichtung nach Anspruch 13, dadurch gekennzeichnet, daß der vorgenannte Konditionierer (16) spezialisierte Schaltkreise und eine Kombinierlogik besitzt, die es gestattet, aus dem Videosignal, das von der vorgenannten Kamera (2) geliefert wird, Signale zur Synchronisation der Teilbilder (ST) und der Linien (SL) und zur Bestimmung der Beginns und des Endes eines Teilbildes herauszulösen, um zu Beginn eines geradzahligen Teilbildes eines Videobildes die Bewegung der Spiegel zur horizontalen und vertikalen Auslenkung in der Abtastbeginnstellung und zum Beginn des folgenden ungeradzahligen Teilbilds des folgenden Videobildes, die Bewegung des Spiegels (6) zur Durchführung der Abtastung einer neuen telemetrischen Linie zu steuern.

15. Vorrichtung nach den Ansprüchen 12 bis 14, dadurch gekennzeichnet, daß der vorgenannte Konditionierer (16) weiterhin elektronische Schaltkreise besitzt, die geeignet sind, ein erstes Signal (F1), das am Beginn eines ungeradzahligen Teilbildes erscheint und mit dem ungeradzahligen Teilbild endet, um ein Fenster zu definieren, das die Entnahme der Daten bezüglich der Ausgangsstellungen der Spiegel zur vertikalen und horizontalen Auslenkung (6, 7) vor der Abtastung einer telemetrischen Linie, die horizontale Abtastung, die Aussendung der impulsartigen Strahlung und die Inkrementierung des Spiegels zur vertikalen Abtastung bei einer folgenden telemetrischen Linie gestattet, ein zweites Signal (F3), das nach dem Beginn jedes geradzahligen Teilbildes ausgesendet wird, um die Auswahl der Zahl der Videolinien zu erlauben, in die die telemetrischen Daten eingeschrieben werden, und ein drittes Signal (F2) zu erzeugen, das kurz nach dem Erscheinen des zweiten Signales (F3) ausgesendet wird, um das Einschreiben der telemetrischen Daten (DT) in jede ausgewählte Linie gültig zu machen.

16. Vorrichtung nach einem der Ansprüche 12 bis 15, dadurch gekennzeichnet, daß der genannte Konditionierer (16) auch eine Stufe zur Verriegelung und zum Clamping besitzt, die es erlaubt, Clampingimpulse zur richtigen Ausrichtung der Videosignale und der telemetrischen Signale zu erzeugen.

17. Vorrichtung nach einem der Ansprüche 12 bis 16, dadurch gekennzeichnet, daß sie ein Entkupplungsmittel (15), wie eine Abdeckung in Form einer Platte, der Aussendung und dem Empfang der impulsartigen Strahlung bis zur Höhe der genannten Spiegel (6,7) besitzt.

18. Vorrichtung nach einem der Ansprüche 12 bis 17, dadurch gekennzeichnet, daß das telemetrische Gerät (3) vom Lasertyp ist.

19. Vorrichtung nach einem der Ansprüche 12 bis 18, dadurch gekennzeichnet, daß sie weiterhin einen an Bord des Fahrzeuges befindlichen Rechner besitzt, der die telemetrischen Daten (DT) und die Videodaten bewertet und Signale arbeitet, die zur Steuerung der Organe zur Sichereit des Fahrzeuges bestimmt sind.

**Claims**

1. Method for detecting obstacles particularly in front of a motor vehicle, including the steps of furnishing by means of a video camera put on board of the vehicle a composite video signal representative of a video picture of a scene in front of the vehicle; of measuring the distances of the obstacles from the scene with respect to the vehicle by means of a telemetry apparatus (3) also on board of the vehicle and the impinging pulse waves of which scan the scene along successive horizontal telemetry lines; and of synchronizing the pulsed emission of impinging waves and the scanning thereof, obtained from the frame and line synchronizing signals withdrawn from the video signals, characterized in that it comprises the steps of writing or encrusting in the video picture in a synchronized manner the telemetry data of the telemetry apparatus (3), representative of the measured distances d of obstacles and the co-ordinates ($\theta$x, $\theta$y) of the impact points (11) of the pulse waves impinging respectively on the obstacles.

2. Method according to claim 1, characterized in that the pulsed emission of the said impinging waves is accomplished during each odd frame of the video image and the recording of telemetry data (DT) is accomplished during the following even frame of the image.

3. Method according to claim 1 or 2, characterized in that it comprises the steps of accomplishing the pulsed emission of the said impinging waves at a first predetermined clock frequency (H1) obtained from the frequency of the line synchronizing signal (SL), of digitalizing at least the telemetry data relative to the measured distances of the impact points during the odd frame of emission of pulse waves at a sampling frequency equal to the first clock frequency (H1) ; of storing the digitalized telemetry data during the odd frame at a combination of the first clock frequency (H1) and of a second clock frequency (H2), preferably the double of the first one, in view to avoid data conflicts; and of controlling the storage of the digitalized data during the following even frame in a certain number of successive video lines of the even frame at a third clock frequency (H3) obtained from the line synchronizing signal (SL) and greater than the first (H1) and second (H2) clock frequencies.

4. Method according to one of the foregoing claims, characterized in that the said pulse waves scan horizontally a telemetry line of the scene during a odd frame at the first clock frequency (H1) and the pulse wave beam is vertically and horizontally deviated during the following even frame at a start position of the scanning of a following telemetry line, this scanning being accomplished during the following odd frame.

5. Method according to claim 1, characterized in that it comprises the steps of digitalizing and storing only at the end of the even frame, the values of the position of the beginning of each scanning of a telemetry line and for reconstituting automatically the positions of the different impact points of the successive pulse outgoing from a preestablished scanning curve preferably ramp-shaped.

6. Method according to claim 2, characterized in that it comprises the steps of producing at the beginning of each even frame a selection signal (F3) of the number of video lines in which the telemetry data are written and of producing, shortly after the selection signal (F3), an enabling signal (F2) for storing the telemetry data (DT) in the selected video lines.

7. Method according to claim 6, characterized in that said video lines wherein the telemetry data (DT) are stored, are present in the upper part of the video image (IM) after a multitude of lines forced to be black and include, from the top to the bottom a line forced to be blank for general start (LC1), a line (LC2) for the identification number qf the video image (IM) and the lines (LC3-LC8) properly adapted for the storage of the telemetry data (DT).

8. Method according to one of the foregoing claims, characterized in that the telemetry data (DT) and the data of the video image are stored on a storage device such as a magnetoscope.

9.   Method according to one of the claims 1 to 7, characterized in that the telemetry data (DT) and the video image are processed in real time.

10.  Method according to one of the foregoing claims, characterized in that the impact points (11) of the pulse waves (11) are located in a zigzag configuration due to a time shifting of one telemetry line on two at the beginning of each horizontal scanning.

11.  Method according to one of the foregoing claims, characterized in that the telemetry data (DT) are digitalized on 11 bits with a supplementary start bit.

12.  Device for detecting obstacles for putting into practice the method such as defined in claims 1 to 11, characterized in that in comprises a video camera (2) provided on board of the vehicle for picking up a scene in front of the vehicle ; a telemetry apparatus (3) for measuring the distance d of obstacles of the scene with respect to the vehicle ; an assembly (6, 7) for deviating a pulse radiation emitted by the telemetry apparatus (3) to at least one movable deflecting mirror (6, 7) controlled in view to cause the radiation to accomplish a scanning movement of horizontal successive telemetry lines of the scene; and a signal conditioner (16) adapted to produce from the frame (ST) and line (SL) synchronizing signals of a video signal of a camera (2), signals allowing the control in a same odd frame of the pulse radiation emission and of the horizontal scanning movement of the mirror (6; 7) and signals adapted to store during the following even frame in successive video lines of the video image telemetry data (DT) concerning the coordinates of the points (11) of impact of the pulse radiation on the obstacles of the scene and at the measured distance d of each impact point (11) with respect to the vehicle.

13.  Device according to claim 12, characterized in that it comprises two movable mirrors (6, 7) for respectively horizontal and vertical deviation of the pulse radiation and which are controlled during each even frame following an odd frame of the horizontal scanning in view to be brought back to a position for beginning the scanning of a new telemetry line.

14.  Device according to claim 13, characterized in that the said conditioner (16) comprises specialised circuits and a combinatory logic allowing to withdraw from the video signal furnished by the said camera (2) signals for frame (ST) and line (SL) synchronization and for determining the beginning and the end of a frame in view to control at the beginning of an even frame of a video image the movement of the horizontal and vertical deviation mirrors in the position of the beginning of the scanning and at the beginning of the following odd frame of the following video image, the movement of the mirror (6) for accomplishing the scanning of a new telemetry line.

15.  Device according to claims 12 to 14, characterized in that the said conditioner (16) comprises furthermore electronic circuits adapted to produce a first signal (F1) appearing before the beginning of an odd frame and finishing with the odd frame for defining a window authorizing the taking off of data concerning the start positions of the vertical and horizontal deviation mirrors (6, 7) before the scanning of a telemetry line, the horizontal scanning, the emission of a pulsatory radiation and incrementation of the vertical scanning mirror at a following telemetry line ; a second signal (F3) emitted after the beginning of each even frame allowing the selection of the number of video lines in which the telemetry data are stored and a third signal (F2) emitted shortly after the appearing of the second signal (F3) for validating the storage of the telemetry data (DT) in each selected line.

16.  Device according to any of claims 12 to 15, characterized in that the said conditioner (16) comprises also a clamping stage allowing to produce clamping pulses for a correct alignment of the video and the telemetry signals.

17.  Device according to any of claims 12 to 16, characterized in that it comprises a means (15) for deconnecting such as a plate shaped cover, of the emission and the reception of the pulsatory radiation until the level of the said mirrors (6, 7).

18.  Device according to any of claims 12 to 17, characterized in that the telemetry apparatus (3) is of the laser type.

19.  Device according to any of claims 12 to 18, characterized in that it comprises furthermore a computer on board of the vehicle utilizing the telemetry (DT) and video data and establishing signals for the control of the vehicle security members.

Fig. 1

Fig. 2

_Fig. 3_

_Fig. 4_

_Fig. 8_

Fig.5

_Fig. 7_

_Fig. 6_

Fig. 9

Fig. 10

EP 0 512 872 B1

T

ST

DT

θxo  θyo  d1  d20

RA

IN

d

d1  d20

ME 1

ME 2

ME 3

LN

LC

IM

| n° | image | | |
|---|---|---|---|
| θxo | θyo | d1 | d2 |
| d3 | d4 | d5 | d6 |
| d7 | d8 | d9 | d10 |
| d11 | d12 | d13 | d14 |
| d15 | d16 | d17 | d18 |
| d19 | d20 | | |

LC 1
LC 2
LC 3
LC 4
LC 5
LC 6
LC 7
LC 8

BS  BS  BS

BS

| 11 bits | 11 bits | 11 bits | 11 bits |

SL

48 µs
52 µs
64 µs